# EUROPÄISCHE PATENTSCHRIFT

(11) **EP 0 961 039 B1**
(45) Veröffentlichungstag und Bekanntmachung des Hinweises auf die Patenterteilung: **18.02.2004**
(21) Anmeldenummer: 99109265.1
(22) Anmeldetag: 26.05.1999
(51) Int. Cl.: F16B 5/06, F16B 5/00, B65D 90/08

(54) **Verbindungsvorrichtung**
Fastening device
Dispositif de fixation

(30) Priorität: 28.05.1998 DE 29809629 U
(43) Veröffentlichungstag der Anmeldung: 01.12.1999
(73) Patentinhaber: Starplast Kunststoffverarbeitung GmbH, 06867 Weissenfels (DE)
(72) Erfinder: Levermann, Martin, 84333 Malgersdorf (DE)
(74) Vertreter: Ganahl, Bernhard

(56) Entgegenhaltungen:
- DE-A- 1 575 260
- DE-C- 501 365
- FR-E- 83 105
- NL-C- 35 532

## Beschreibung

Die Erfindung betrifft eine Verbindungsvorrichtung zum Verbinden von Teilen an ihren Längskanten, insbesondere zum Verbinden von Kunststoffplatten bzw. Wandungselemente.

Eine derartige Verbindungsvorrichtung dient dem Verbinden von Kunststoffplatten, die gegebenenfalls zu Behältern, wie Kompostem, zusammengesetzt werden.

Aus dem DE-GM 91 10 413 ist ein Komposter bekannt, der aus plattenförmigen Wandelementen im Baukastenprinzip erstellbar ist. Bei diesem bekannten Komposter sind die Wandteilverbindungselemente einstückig mit den Wandteilen ausgebildet. Die Wandteilverbindungselemente sind als Zapfen-Klauenanordnung ausgebildet, wobei ein integral an einer vertikalen Wandungskante verbundener Stab in einen, an einer korrespondierenden vertikalen Wandungskante eines zweiten Wandteils ausgebildeten Stabführungsteils eingreift. Das Stabführungsteil wird aus zwei Stabführungsabschnitten ausgebildet, welche zusammen im Querschnitt in etwa U-förmig ausgebildet sind, wobei die Basis des Gebildes mit der entsprechenden Wandteilseitenkante verbunden ist. In das U-förmige Gebilde mit den je einen Schenkel ausbildenden Stabführungsabschnitten greift der Stab eines benachbarten Wandteils ein, welches im wesentlichen einen runden Querschnitt aufweist. Gehaltert wird die stabförmig ausgebildete vertikale Wandungskante, in dem im Querschnitt U-förmigen gebildeten Stabführungsteile durch ein umgebogenes verlängertes Ende eines der Schenkel, der sich bei in das Gebilde eingesetztem Stab zu Außenfläche des entsprechenden benachbarten Wandteils erstreckt. Bei dieser Ausbildung sind die Wandteile auch nach der bestimmungsgemäßen Montage vertikal verschiebbar. Die Entladung von Humus kann in der Art erfolgen, daß ein Wandungsteil gegenüber den anderen Wandungsteilen vertikal verschoben wird, so daß der Humus entnommen werden kann.

Die CH-PS 543 009 zeigt eine Schiene zum Verbinden von Möbelteilen. Das Profil der Schiene hat die Form eines T, dessen Querbalken an den Enden rechtwinklig nach innen bezüglich der Baueinheiten abgebogen sind und bei dem am Fußende des Mittelbalkens ein kleiner Querbalken angesetzt ist. Die abgewinkelten Enden des Querbalkens und der kleine am Fußende des Mittelbalkens angesetzte Querbalken greifen in korrespondierende Nuten an den Möbelteilen ein. Da diese Querbalken im rechten Winkel zueinander angeordnet sind, verhindern sie ein Verschieben der derart miteinander verbundenen Möbelteile.

Aus der DE-PS 501 365 und der DE-PS 701 652 sind doppel-T-förmige Schienen bekannt, mit welchen zwei Platten an ihrem Stoß miteinander verbunden werden können, wobei zwischen den sich gegenüberliegenden T-Querbalkenstegen der Schiene die Platten eingeklemmt werden. Zur Erzielung dieser klemmenden Verbindung wird zumindest einer der beiden T-Querbalkenstege mechanisch verformt.

Aus der DE-PS 569 082 geht ein geschlitztes rohrförmiges Verbindungselement hervor, das mit seinen den Schlitz begrenzenden Längskanten gegen ausgekragte Leisten von zu verbindenden Teilen geklemmt wird.

Aus der NL-C-35 532 geht ein Element zum Verbinden von Platten hervor. Die Platten weisen an ihren Rändern Vorsprünge auf, die etwa quer zur Ebene der Platten vorstehen. Diese Vorsprünge sind gewölbt ausgebildet, so dass bei zwei mit ihren Rändern aneinander angrenzend angeordneten Platten diese Vorsprünge in den Bereichen ihrer Anbindungsstellen an den übrigen Platten und in den Bereichen ihrer freien Enden aneinander anliegen. Das Verbindungselement ist rohrförmig ausgebildet und weist einen Schlitz auf, so dass es über zwei Vorsprünge zweier benachbarter Platten geschoben werden kann, wobei der Schlitz im Bereich der Anbindungsstellen der Vorsprünge an den übrigen Platten angeordnet ist.

Aufgabe der Erfindung ist es, eine Verbindungsvorrichtung zu schaffen, mit der Längskanten, insbesondere Längskanten von Wandteilen, bei leichter Montierbarkeit auch bei schwankender oder unterschiedlicher Wandungsstärke sicher miteinander verbunden werden können, wobei die Verbindung eine begrenzte Flexibilität aufweist und die zu verbindenden Teile exakt ausrichtet.

Die Aufgabe wird mit einer Verbindungsvorrichtung mit den Merkmalen des Anspruchs 1 gelöst. Vorteilhafte Weiterbildungen sind in Unteransprüchen angegeben.

Erfindungsgemäß wird eine Verbindungsvorrichtung aus je einem an und entlang von Längskanten der zu verbindenden Teile ausgebildeten, insbesondere einteilig mit den Teilen ausgebildeten, vorstehenden Verbindungssteg und einer, die Verbindungsstege übergreifenden Verbindungsprofilschiene ausgebildet. Die Längskanten der Wandungen sind vorzugsweise gleich ausgebildet.

Die erfindungsgemäße Verbindungsvorrichtung dient zum Verbinden von Teilen, die an ihren Längskanten jeweils mit einem Verbindungssteg ausgebildet sind, der aus einem unmittelbar an dem zu verbindenden Teil angeordneten Basisstegabschnitt, einem Mittelstegabschnitt, der etwa im rechten Winkel zum Basisstegabschnitt angeordnet ist, und einen eine freie Längskante des Verbindungssteges bildenden Endstegabschnitt ausgebildet ist, der bezüglich des Mittelstegabschnittes in Richtung zum Basisstegabschnitt um einen Winkel α abgewinkelt ist. Zudem ist eine Verbindungsprofilschiene vorgesehen, welche einen im Querschnitt T-förmigen Schienenbasissteg mit einem T-Querbalkensteg und einem T-Längsbalkensteg aufweist, wobei an dem dem T-Querbalkensteg gegenüberligenden Bereich des T-Längsbalkenstegs ein Klemmprofil derart ausgebildet ist, daß es an den Endstegabschnitten mit Vorspannung derart anliegt, daß die Mittelstegabschnitte gegen den T-Längsbalkensteg und die Basisstegabschnitte gegen den T-Querbalkensteg gedrückt werden.

Da das Klemmprofil die Verbindungsstege mit ihren Mittelstegabschnitten gegen den T-Längsbalkensteg und mit ihren Basistegabschnitten elastisch gegen den T-Querbalkensteg drückt, werden die Verbindungsstege und die damit verbundenen Teile am T-förmigen Schienenbasissteg exakt ausgerichtet, wobei durch die Halterung mittels Vorspannung die Verbindungsstege erhebliche Toleranzen bezüglich ihrer Wandstärke und/oder Formgebung aufweisen können und dennoch sicher und exakt am T-förmigen Schienenbasissteg ausgerichtet miteinander verbunden werden. Zudem können die Verbindungsstege bei einer Zugbelastung mit ihren Mittelstegabschnitten vom T-Längsbalkensteg abgehoben werden, ohne daß hierbei die Verbindung gelöst wird, so daß durch Relativbewegungen der verbindenden Teile ausgeglichen werden können.

Das Klemmprofil ist vorzugsweise als ein im Querschnitt 2/3 bis 3/4 kreisbogenförmiger, rohrförmiger Schienenabschnitt ausgebildet, der beidseitig des T-Längsbalkenstegs und symmetrisch zum T-Längsbalkensteg je einen gleich langen Schenkel aufweist. Die Verbindungsprofilschiene wird auf die Stege der Wandung aufgeschoben, wobei der T-Längsbalkensteg zwischen den Mittelstegabschnitten an diesen anliegend angeordnet ist und die zum T-Längsbalkensteg benachbarten Flächen des T-Querbalkenstegs an den Basisstegabschnitten anliegen.

Die freien Längskanten der Schenkel des z.B. rohrförmigen Schienenprofilelements können an den T-förmigen Basisstegen von außen anliegen oder sind geringfügig von diesen beabstandet. Die Verbindungsstege der Wandungen werden durch den T-Basissteg bzw. das T-Profil einerseits und die Anlage an der Innenfläche des rohrförmigen Schienenabschnitts gegen Querbewegungen gesichert. Eine zügige Belastung, welche auf eine Vergrößerung des Abstandes zwischen den Teilen gerichtet ist, wird zunächst durch die Innenwandung des rohrförmigen Schienenabschnitts gesperrt, wobei ein elastisches Nachgeben der Verbindungsstege im Anbindungsbereich an die Wandungsabschnitte möglich ist, bis die Verbindungsstege an den freien Endkanten des rohrförmigen Abschnitts anliegen. Diese können ebenfalls etwas nachgeben, so daß die gesamte Verbindungsvorrichtung eine zügige Belastung federnd abfangen kann.

Die erfindungsgemäße Verbindungsvorrichtung kann auch für horizontale Verbindungen zwischen Wandelementen verwendet werden.

Mit der erfindungsgemäßen Verbindungsvorrichtung können Wand- und Deckenplatten, beispielsweise Wandverkleidungsplatten oder Platten für abgehängte Decken miteinander verbunden werden. Ferner können Wandelemente für Behälter oder Metallbleche mit der Verbindungsvorrichtung verbunden werden.

Bei der erfindungsgemäßen Verbindungsvorrichtung ist von Vorteil, daß die zu verbindenden Teile im Bereich ihrer Längskanten gleich ausgebildet sind, wodurch die Montage erleichtert wird. Darüber hinaus sind derartige Verbindungsvorrichtungen an Wandungsplatten einfach und kostengünstig herstellbar. Bei Wandungselementen aus Metallblechen können die Längskanten entsprechend geprägt, gebogen oder tiefgezogen werden. Ist die Verbindungsprofilschiene aus Metall ausgebildet, kann sie stranggepreßt oder stranggezogen sein. Wandelemente aus Kunststoff können in einfacher Weise einteilig mit den Verbindungsstegen spritzgepreßt, spritzgegossen oder gepreßt werden. Darüber hinaus ist von Vorteil, daß die Verbindungsvorrichtung Relativbewegungen zwischen den Wandungselementen ausgleicht bzw. abfängt. Des weiteren wird auch bei insbesondere fertigungsbedingt schwankenden oder ungleichen Wandungsstärken der zu verbindenden Wandungen eine sichere Verbindung erzielt. Darüber hinaus werden Dehnungen der Wandelemente durch die Verbindungsvorrichtung aufgefangen.

Im folgenden wird die Erfindung anhand einer Zeichnung beispielhaft erläutert. Es zeigen dabei:
- Fig. 1: eine erfindungsgemäße Verbindungsvorrichtung für die Verbindung zweier Wandelemente im Eckstoßbereich in einem Querschnitt,
- Fig. 2: eine Verbindungsvorrichtung nach Fig. 1 für die Verbindung zweier Wandelemente in einem ebenen Stoßbereich im Querschnitt, und
- Fig. 3: eine Verbindungsvorrichtung gemäß einer weiteren Ausführungsform der Erfindung in einem Querschnitt.

Eine erfindungsgemäße Verbindungsvorrichtung 1 insbesondere für Kunststoffplatten bzw. -wandungen oder -bleche oder Metallbleche weist an den Wandungen 2 ausgebildete Verbindungsstege 3 und ein die Stege 3 miteinander bzw. aneinander verbindendes Verbindungselement bzw. eine Verbindungsprofilschiene 4 auf.

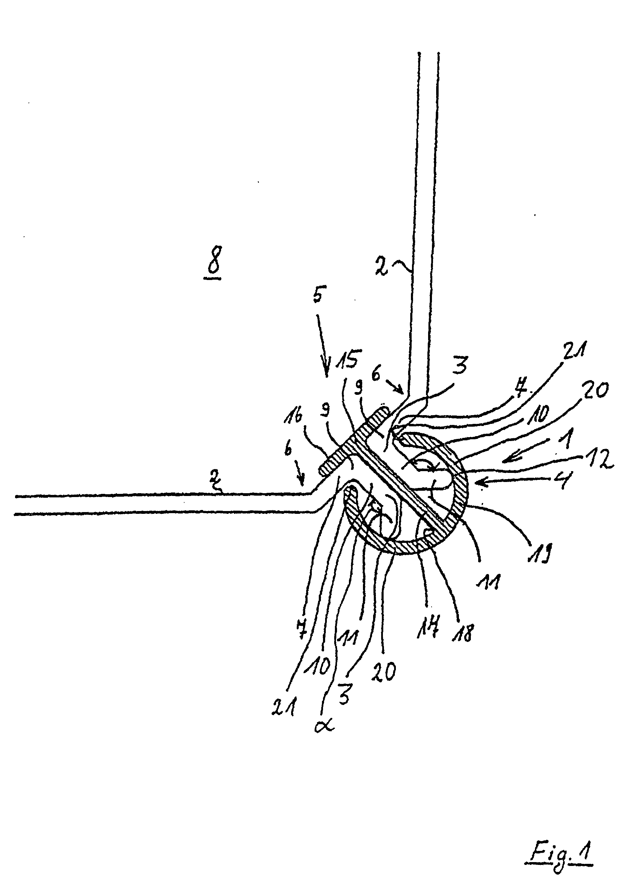

Für die Verbindung von Wandungen bzw. Wandungsplatten 2 über Eck in Eckbereichen 5 von Behältern, insbesondere Komposter, oder dergleichen (Fig. 1) ist entlang eines vertikalen Längskantenbereichs 6 bzw. der Längskante 6 der Kunststoffplatte 2 je ein Basisstegabschnitt 7 bezüglich der Platten- bzw. Längsebene zu einem Behälterinneren 8 derart abgebogen bzw. abgekantet ausgebildet, daß zwei schmale, aufeinanderzuweisende Basisstegabschnitte 7 zweier zu verbindender Platten 2 miteinander fluchten bzw. eben abschließen. Die Abkantung bzw. Abbiegung erfolgt insbesondere in einem stumpfen Winkel zur Wandungsebene.

Bei einem Eckwinkel der Ebenen der Wandungen 2 zueinander von 90° sind die Basisstegabschnitte 7 um etwa 45° abgebogen bzw. abgekantet. Bei polygoner Ausgestaltung eines durch die Wandungen 2 begrenzten Behälters bzw. einer Anordnung von mehr als vier Wänden verändert sich, insbesondere verringert sich dieser Winkel entsprechend.

Von einem den Platten bzw. Wandungen 2 gegenüberliegenden Längskantenbereich 9 der Basisstegabschnitte 7 erstreckt sich entlang des Längskantenbereichs 9 ein Mittelstegabschnitt 10 senkrecht zur Ebene des Basisstegabschnitts 7 nach außen. Ein Endstegabschnitt 11 schließt sich an den Mittelstegabschnitt 10 an und ist zum Mittelstegabschnitt 10 hin stumpf mit dem Winkel α abgewinkelt und bezüglich des Basisstegabschnitts 7 spitz gewinkelt orientiert ausgebildet, so daß bei zwei in einem Eckbereich eines Behälters aneinander angeordneten Wandungen 2 die Endstegabschnitte 11 nach außen divergierend ausgebildet sind. Der Winkel α liegt vorzugsweise im Bereich von 100° bis 170° und beträgt vorzugsweise 120° bis 160°. Die abgebogene Orientierung des Endstegabschnitts 11 kann auch sukzessiv ohne Winkel ausgebildet sein.

Ein erfindungsgemäßes Verbindungselement 4 bzw. eine erfindungsgemäße Verbindungsprofilschiene 4 ist ein längliches Profil 4, insbesondere ein Metallprofil oder ein extrudiertes Kunststoffprofilelement.

Die Verbindungsprofilschiene 4 weist einen im Querschnitt T-förmigen Schienenbasissteg 15 mit einem T-Querbalkensteg 16 und einem T-Längsbalkensteg 17 auf. An dem, dem T-Querbalkensteg 16 gegenüberliegenden Fuß 18 des T-Längsbalkenstegs 17 ist ein als ein Klemmprofil fungierendes, im Querschnitt 2/3 bis 3/4 kreisbogenförmiges bzw. C-förmiges Rohrprofilelement 19 ausgebildet, welches im Bereich des T-Längsbalkenstegs 17 längsgeschlitzt ist. Das Rohrprofilelement 19 weist zwei gleich ausgebildete, gleichlange Schenkel 20 auf, welche sich vom Fuß 18 des T-Längsbalkensteg 17 kreisbogenabschnittförmig zum T-Querbalkensteg hin erstrecken. Freie Endkanten bzw. Längskanten 21 des Rohrprofilelements 19 sind benachbart zu einem Anbindungsbereich des T-Querbalkenstegs 16 an den T-Längsbalkensteg 17 von beiden in etwa gleich beabstandet angeordnet. Der Durchmesser des den Verlauf des Rohrprofilelements 19 bestimmenden Kreises entspricht in etwa der Erstreckung des T-Längsbalkenstegs 17 vom T-Querbalkensteg 16 zum Fuß 18 des T-Längsbalkenstegs 17 oder ist etwas geringer.

Zum Verbinden zweier Wandungen 2 mit der erfindungsgemäßen Verbindungsvorrichtung 1 werden die Platten 2 bzw. Wandungen 2 in dem vorbestimmten, gewünschten Eckwinkel zueinander gestellt, wobei die Mittelstegabschnitte 10 der jeweiligen Kunststoffplatten bzw. -wandungen 2 parallel zueinander gering voneinander beabstandet orientiert sind. Entlang der Längserstreckung der Mittelstegabschnitte 10 bzw. der Endstegabschnitte 11 wird das erfindungsgemäße Verbindungsprofilelement bzw. die erfindungsgemäße Verbindungsprofilschiene 4 aufgeschoben, so daß sich der T-Längsbalkensteg 17 zwischen den Mittelstegabschnitten 10 an beiden anliegend befindet. Die zu den T-Längsbalkensteg 17 benachbart angeordneten Flächen des T-Querbalkenstegs 16 liegen an je einem Basisstegabschnitt 7, an der den Mittelstegabschnitten 3 gegenüberliegenden Fläche an. Das Rohrprofilelement 19 umgreift mit seinen kreisbogenförmigen Schenkeln 20 die Endstegabschnitte 11, wobei die freien Längskanten 12 der Endstegabschnitte 11 vom Inneren der Verbindungsprofilschiene 4 her an den Innenwandungen der Schenkel 20 vorzugsweise mit Vorspannung anliegen. Hierdurch wird von den Schenkeln 20 eine Kraft auf die Endstegabschnitte 11 ausgeübt, die in eine den jeweiligen Mittelstegabschnitt 10 gegen den T-Längsbalkensteg 17 drückende Kraftkomponente und in eine den jeweiligen Basisstegabschnitt 7 gegen den T-Querbalkensteg 16 drückende Kraftkomponente aufgeteilt werden kann. Bei dem in Fig. 1 gezeigten Ausführungsbeispiel ist die von den Schenkeln 20 auf die Endstegabschnitte 11 ausgeübte Kraft in Richtung von der freien Längskante 12 zum Scheitelpunkt des Winkels α gerichtet. Beträgt der Winkel α 135°, so sind die beiden Komponenten, die auf den Basisstegabschnitt 7 bzw. den Mittelstegabschnitt 10 ausgeübt werden, gleich groß. Je kleiner der Winkel α gewählt wird, desto größer ist die auf den Mittelstegabschnitt 10 wirkende Kraftkomponente.

Durch diese Vorspannung werden die Verbindungsstege 3 am T-förmigen Schienenbasissteg 15 ausgerichtet und sicher gehalten.

Die freien Längskanten 21 der Schenkel 20 liegen von außen an den Mittelstegabschnitten 10 an, oder sind gering von diesen beabstandet. Durch die Anlage des T-Querbalkenstegs 16 an den Basisstegen 17 und die Anlage der Endstegabschnitte 11 am Rohrprofil 19, werden die Verbindungsstege in der Verbindungsprofilschiene 4 fest verspannt.

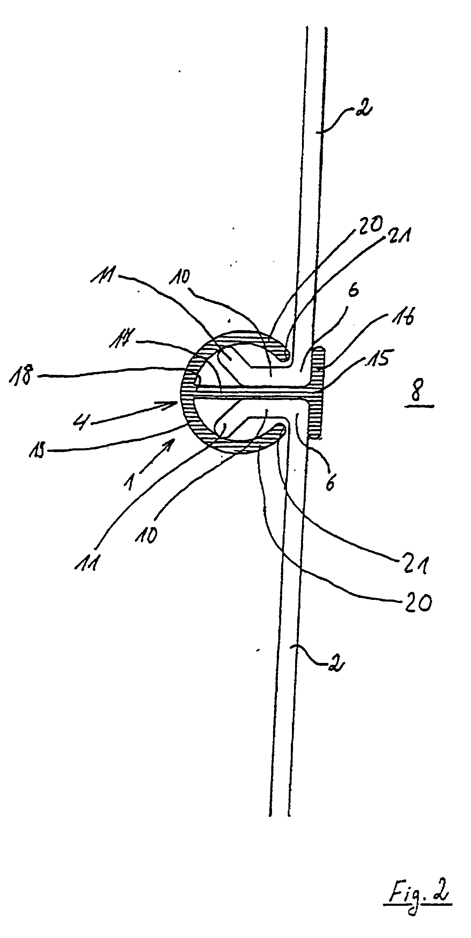

Darüber hinaus ist es möglich, eine erfindungsgemäße Verbindungsvorrichtung nicht im Eckbereich, sondern z.B. im Bereich der Seitenflächen eines geplanten Behälters oder für sonstige Teile mit Längskanten oder Platten 2, wie z. B. Wand- oder Deckenplatten, vorzusehen (Fig. 2). Bei einer ebenen Verbindung von Wandungen 2 sind die Basisstegabschnitte 7 an Längskantenbereichen 6 der Wandungen 2 ohne Abkantung ausgebildet. Die Mittelstegabschnitte 10 erstrecken sich wiederum senkrecht zu den Ebenen der Basisstegabschnitte 7, die hier mit den Ebenen der Wandungen 2 zusammenfallen. Die Endstegabschnitte 11 sind bezüglich der Wandungen 2 vorzugsweise spitz gewinkelt orientiert angeordnet. Die Montage erfolgt in gleicher Weise wie bei dem zuvor beschriebenen ersten Ausführungsbeispiel, wobei die zu dem T-Längsbalkensteg benachbarten Flächen des T-Querbalkenstegs 16 des Schienenbasisstegs 15 an den, den Mittelstegabschnitt 19 gegenüberliegenden, insbesondere Innenflächen eines Behälters anliegen.

Selbstverständlich ist es bei beiden Ausführungsformen auch möglich, die Verbindungsstege 3 ins Behälterinnere 8 weisen zu lassen, so daß die Verbindungsprofilschiene 4 mit dem Rohrprofilelement 19 ins Behälterinnere weist.

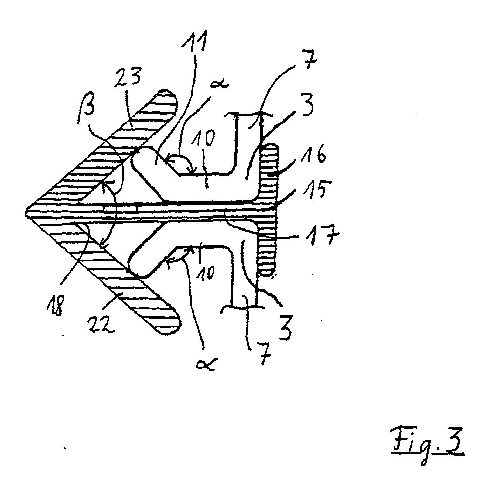

Fig. 3 zeigt eine weitere Ausführungsform der erfindungsgemäßen Verbindungsvorrichtung, die wiederum Verbindungsstege 3 mit je einem Basisstegabschnitt 7, einem Mittelstegabschnitt 10 und einem Endstegabschnitt 11 aufweist. An den Basistegabschnitten 7 können beliebige Teile, wie z.B. Wandungen oder auch dreidimensionale Körper angerollt sein.

Die Verbindungsprofilschiene 4 zum Verbinden der die Verbindungsstege 3 aufweisenden Teile weist wiederum eine Verbindungsprofilschiene 4 mit einem T-förmigen Schienenbasissteg 15 und einem Klemmprofil 19 auf. Der Schienenbasissteg ist wie bei den oben beschriebenen Ausführungsbeispielen aus einem T-Querbalkensteg 16 und einem T-Längsbalkensteg 17 ausgebildet. Das am Fuß 18 des T-Längsbalkenstegs angeformte Klemmprofil 19 ist bei dieser Ausführungsform aus zwei ebenflächigen Klemmstegen 22, 23 ausgebildet. Die beiden Klemmsteg 22, 23 weisen zusammen mit dem T-Längsbalkensteg 17 im Querschnitt (Fig. 3) die Form einer pfeilförmigen Spitze auf, wobei die Klemmstege 22, 23 einen Winkel β einschließen, der im Bereich von 70° bis 110° liegt und vorzugsweise 90° beträgt.

Die Funktionsweise dieser Ausführungsform ist die gleiche, wie die der oben beschriebenen Ausführungsformen. Die Klemmstege 22, 23 liegen mit Vorspannung an den Endstegabschnitten 11 an und drücken die Mittelstegabschnitte 10 gegen den T-Längsbalkensteg 17 und die Basisstegabschnitte 7 gegen den T-Querbalkensteg 16.

Unabhängig von der Ausführungsform können an den axialen Endbereichen der Verbindungsstege 3 die Stimkanten der Verbindungsstege 3, insbesondere die Endstegabschnitte 11 des Mittelstegabschnitts 10 zur Aufschub- oder Aufsteckrichtung der Verbindungsprofilschiene 4 hin geneigt bzw. sich verjüngend abgeschrägt ausgebildet sein, um das Aufstecken der Verbindungsprofilschiene 4 auf die Verbindungsstege 3 zu erleichtern.

Die erfindungsgemäße Verbindungsprofilschiene 4 ist aus einem Metall, insbesondere als stranggepreßtes oder gezogenes Metallprofil oder Kunststoff, insbesondere einem extrudiertem Kunststoff hergestellt. Insbesondere findet Recyclingkunststoff aber auch faserverstärkter Kunststoff Verwendung.

Die gesamte Verbindungsvorrichtung kann auch aus Metall ausgebildet sein und zur Verbindung von Metallblechen verwendet werden. Die Wandungen 2 und die Stege 3 können auch aus Holzwerkstoffen, wie Kunstharz verstärkten Holzwerkstoffen oder Faserverbundmaterialien ausgebildet sein.

Bei der erfindungsgemäßen Verbindungsvorrichtung für Wandelemente bzw. plattenförmige Elemente ist von Vorteil, daß die Wandungen bzw. Platten im Bereich ihrer vertikalen Längskanten gleich ausgebildet sind, wodurch die Montage erleichtert wird. Darüber hinaus sind derartige Verbindungsvorrichtungen an Wandungsplatten einfach und kostengünstig herstellbar. Bei Wandungselementen aus Metallblechen können die Längskanten entsprechend geprägt, gebogen oder tiefgezogen werden. Ist die Verbindungsprofilschiene aus Metall ausgebildet, kann sie stranggepreßt oder gezogen sein. Wandelemente aus Kunststoff können in einfacher Weise spritzgepreßt, spritzgegossen oder gepreßt werden. Darüber hinaus ist von Vorteil, daß die Verbindungsvorrichtung Relativbewegungen zwischen den Wandungselementen ausgleicht bzw. abfängt. Des weiteren wird auch bei insbesondere fertigungsbedingt schwankenden oder ungleichen Wandungsstärken der zu verbindenden Wandungen eine sichere Verbindung erzielt. Darüber hinaus werden Dehnungen der Wandelemente durch die Verbindungsvorrichtung aufgefangen. Insbesondere wird durch das erfindungsgemäße Vorsehen von bogenförmigen Schenkeln des Rohrprofilelements sowie der nach außen abgeschrägt ausgebildeten Anlagestege ein Federungseffekt erzielt.

## Patentansprüche

1. Verbindungsvorrichtung zum Verbinden von Teilen an ihren Längskanten (6), insbesondere zum Verbinden von Kunststoffplatten bzw. Wandungselemente (2), wobei
an den Längskanten jeweils ein Verbindungssteg (3) ausgebildet ist, der aus einem unmittelbar an dem zu verbindenden Teil angeordneten Basisstegabschnitt (7), einem Mittelstegabschnitt (10), der etwa im rechten Winkel zum Basisstegabschnitt (7) angeordnet ist, und einen eine freie Längskante des Verbindungssteges (3) bildenden Endstegabschnitt (11) ausgebildet ist, der bezüglich des Mittelstegabschriittes (10) in Richtung zum Basisstegabschnitt (7) um einen Winkel (α) abgewinkelt ist, und
eine Verbindungsprofilschiene (4) vorgesehen ist, welche einen im Querschnitt T-förmigen Schienenbasissteg (15) mit einem T-Querbalkensteg (16) und einem T-Längsbalkensteg (17) aufweist, wobei an dem dem T-Querbalkensteg (16) gegenüberligenden Bereich des T-Längsbalkenstegs (17) ein Klemmprofil (19) derart ausgebildet ist, daß es an den Endstegabschnitten (11) mit Vorspannung derart anliegt, daß die Mittelstegabschnitte (10) gegen den T-Längsbalkensteg (17) und die Basisstegabschnitte (7) gegen den T-Querbalkensteg (16) gedrückt werden.

2. Verbindungsvorrichtung nach Anspruch 1, wobei
das Klemmprofil derart ausgebildet ist, daß es an den freien Längskanten (12) der Endstegabschnitte (11) mit Vorspannung anliegt.

3. Verbindungsvorrichtung nach Anspruch 1 oder 2, wobei
der Winkel (α) zwischen dem Mittelstegabschnitt (10) und dem Endstegabschnitt (11) ein stumpfer Winkel ist, der vorzugsweise im Bereich von 115° bis 155° liegt.

4. Verbindungsvorrichtung nach einem der Ansprüche 1 bis 3, wobei
das Klemmprofil als längsgeschlitztes Rohrprofilelement (19) mit rundlichen oder eckigen Querschnitt ausgebildet ist, das etwa symmetrisch um den T-Längsbalkensteg (17) angeordnet ist.

5. Verbindungsvorrichtung nach Anspruch 4, wobei
das Rohrprofilelement (19) im Querschnitt kreisbogenabschnittförmig, einen 2/3 bis 3/4 Kreisbogen beschreibend, im Querschnitt in etwa C-förmig ausgebildet ist.

6. Verbindungsvorrichtung nach Anspruch 4 oder 5, wobei
freie Endkanten bzw. Längskanten (21) des Rohrprofilelements (19) benachbart zum Anbindungsbereich des T-Querbalkenstegs (16) an den T-Längsbalkensteg (17) angeordnet sind, so daß die freien Längskanten (21) des Rohrprofilelements (19) von außen an den Verbindungsstegen (3) anliegen oder gering von diesen beabstandet angeordnet sind.

7. Verbindungsvorrichtung nach einem der Ansprüche 1 bis 3, wobei
das Klemmprofil aus zwei Klemmstegen (22, 23) ausgebildet,sind, die zueinander abgewinkelt angeordnet sind und im Querschnitt zusammen mit dem T-Längsbalkensteg (17) etwa eine pfeilförmige Spitze bilden.

8. Verbindungsvorrichtung nach Anspruch 7, wobei
die beiden Klemmstege (22, 23) einen Winkel (β) von 80° bis 100° und vorzugsweise von etwa 90° einschließen.

9. Verbindungsvorrichtung nach einem der vorhergehenden Ansprüche, wobei die längsaxialen Endbereiche der Verbindungsstege (3) bzw. der Längskanten (6) der Wandungen (2) die Stirnkanten der Verbindungsstege (3), insbesondere die Endstegabschnitte (11) zur Aufschub- oder Aufsteckrichtung der Verbindungsprofilschiene, (4) hin geneigt bzw. abgeschrägt ausgebildet sind, um das Aufstecken der Verbindungsprofilschiene (4) auf die Verbindungsstege (3) zu erleichtern.

## Claims

1. Connection device for connecting parts at their longitudinal edges (6), in particular for the connection of plastic sheets or wall elements (2), wherein there is formed at each of the longitudinal edges a connecting web (3) comprised of a base web section (7) located directly on the part to be connected, a middle web section (10) arranged approximately at right-angles to the base web section (7), and an end web section (11) forming a free longitudinal edge of the connecting web (3) and bent relative to the middle web section (10) at an angle (α) towards the base web section (7), and
there is provided a connecting profile rail (4) which has a rail base web (15) which is T-shaped in cross-section, with a transverse T-beam web (16) and a longitudinal T-beam web (17) wherein, on the section of the longitudinal T-beam web (17) lying opposite the transverse T-beam web (16) a clamping profile (19) is formed in such a way that it lies with prestress against the end web sections (11) so that the middle web sections (10) are pressed against the longitudinal T-beam web (17) and the base web sections (7) against the transverse T-beam web (16).

2. Connection device according to claim 1, wherein
the clamping profile is formed so as to lie with prestress against the free longitudinal edges (12) of the end web sections (11).

3. Connection device according to claim 1 or 2, wherein
the angle (α) between the middle web section (10) and the end web section (11) is an obtuse angle, preferably in the range 115º to 155º.

4. Connection device according to any of claims 1 to 3, wherein
the clamping profile is in the form of a longitudinally-slit tubular profile element (19) with rounded or square cross-section which is fitted approximately symmetrically around the longitudinal T-beam web (17).

5. Connection device according to claim 4, wherein
the tubular profile element (19) is designed with a cross-section shaped like a circular arc segment describing 2/3 to 3/4 of a circular arc, in cross-section roughly C-shaped.

6. Connection device according to claim 4 or 5, wherein
free end edges or longitudinal edges (21) of the tubular profile element (19) are located on the longitudinal T-beam web (17) adjacent to the connection area of the transverse T-beam web (16), so that free longitudinal edges (21) of the tubular profile element (19) fit up against the connecting webs (3) from the outside or are arranged with a small clearance from them.

7. Connection device according to any of claims 1 to 3, wherein
the clamping profile is formed by two clamping webs (22, 23), bent at an angle to one another and in cross-section forming together with the longitudinal T-beam web (17) a roughly arrow-shaped tip.

8. Connection device according to claim 7, wherein
the two clamping webs (22, 23) enclose an angle (α) of 80º to 100º and preferably of approximately 90º.

9. Connection device according to any of the preceding claims, wherein the longitudinal axial end sections of the connecting webs (3) and the longitudinal edges (6) of the walls (2), the end face edges of the connecting webs (3), in particular the end web sections (11), are inclined or bevelled towards the direction in which the connecting profile rails (4) are slipped over or fitted on, in order to facilitate the fitting of the connecting profile rails (4) on to the connecting webs (3).

## Revendications

1. Dispositif d'assemblage pour assembler des pièces par leurs bords longitudinaux (6), plus particulièrement pour assembler des plaques en matière plastique ou alors des éléments de parois (2),
étant formé aux bords longitudinaux respectivement un support d'assemblage (3) formé d'une partie base de support (7) disposée directement à la pièce à attacher, d'une partie milieu de support (10) disposée à un angle environ droit de la partie base de support (7), et d'une partie terminale de support (11), formant une bordure longitudinale libre du support d'assemblage (3), coudée relatif à la partie milieu de support (10) en direction de la partie base de support (7) formant un angle (α) et
étant prévu un profil d'assemblage (4) disposant d'un support de base en forme de T (15) au plan transversal avec un support barre de T transversal (16) et un support barre de T longitudinal (17), un profil de cramponnement (19) étant formé à la partie du support barre de T longitudinal (17) opposée au support barre de T transversal (16) de telle manière qu'il soit en contact avec les parties terminales de support (11) avec un serrage initial de telle manière que les parties milieu de support (10) soient poussées contre le support barre de T longitudinal (17) et les parties support de base (7) contre le support barre de T transversal (16).

2. Dispositif d'assemblage selon la revendication 1,
le profil de cramponnement étant forme de manière à ce qu'il soit en contact avec serrage initial avec les bordures longitudinales libres (12) des parties terminales de support (11).

3. Dispositif d'assemblage selon la revendication 1 ou 2,
l'angle (α) entre la partie milieu de support (10) et la partie terminale de support (11) étant un angle obtus, de préférence de 115° à 155°.

4. Dispositif d'assemblage selon l'une des revendications 1 à 3, le profil de cramponnement étant formé en tant qu'élément profil en tube (19) fissuré en longueur ayant un plan transversal rondelet ou anguleux disposé approximativement symétriquement autour du support barre de T longitudinal (17).

5. Dispositif d'assemblage selon la revendication 4, l'élément profil en tube (19) étant formé, au plan transversal, en forme de partie d'arc de cercle, décrivant 2/3 a ¾ d'un arc de cercle en forme de C au plan transversal.

6. Dispositif d'assemblage selon la revendication 4 ou 5,
des bordures libres terminales ou alors longitudinales (21) de l'élément profil en tube (19) étant disposé à proximité de la partie de liaison entre le support barre de T transversal (16) et le support barre de T longitudinal, à ce que les bordures longitudinales libres (21) de l'élément profil en tube (19) soient en contact, de l'exterieur, avec les supports d'assemblage (3) ou soient disposés un peu écartés de ceux-ci.

7. Dispositif d'assemblage selon l'une des revendications 1 à 3,
le profil de cramponnement étant formé par deux supports de cramponnement (22, 23) coudés l'un contre l'autre et formant, au plan transversal, ensemble avec le support barre de T longitudinal (17) une pointe approximativement en forme de flêche.

8. Dispositif d'assemblage selon la revendication 7,
les deux supports de cramponnement (22, 23) renfermant un angle (β) de 80° à 100° et de préférence d'environ 90°.

9. Dispositif d'assemblage selon l'une des revendications précédentes,
les parties terminales longitudinales des supports d'assemblage (3), respectivement des bordures longitudinales (6) des parois (2), les supports de face (3), plus particulièrement les parties terminales de support (11) étant formés chanfreiné ou incliné en direction de mise du profil d'assemblage (4), afin de faciliter la mise du profil d'assemblage (4) sur les supports d'assemblage (3).
